Europäisches Patentamt

European Patent Office

Office européen des brevets

(11) Publication number: **0 343 829**
**A2**

## EUROPEAN PATENT APPLICATION

(21) Application number: 89304934.6

(51) Int. Cl.4: **G06K 7/14**

(22) Date of filing: 16.05.89

(30) Priority: 20.05.88 GB 8811935

(43) Date of publication of application:
29.11.89 Bulletin 89/48

(84) Designated Contracting States:
AT DE ES FR GB IT SE

(71) Applicant: TIME AND DATA SYSTEMS
INTERNATIONAL LIMITED
Crestworth House Sterte Avenue
Poole, Dorset BH15 2AL(GB)

(72) Inventor: Rudland, Peter Edward
131 Lower Blandford Road
Broadstone Dorset BH18 8NT(GB)

(74) Representative: Loughrey, Richard Vivian
Patrick et al
HUGHES CLARK & CO 63 Lincoln's Inn Fields
London WC2A 3JU(GB)

(54) Card or badge for carrying data and reader therefor.

(57) A card or badge (10) for carrying binary data has the data encoded in a track consisting of areas (14) opaque to infra-red radiation. The two binary values are represented respectively by opaque areas (21, 22) of different widths in the direction of the track. The opaque areas are printed on a sheet (11) which is located internally of the card. If desired the card may be opaque or have a selected transmissivity to light in a visible region of the spectrum. A reader for the card is provided with means (18, 19) to sense the card with infra-red radiation to detect the opaque areas (14) and with means (28, 19) to sense the card with visible radiation to check the transmissivity of the card to visible radiation. The source (28) of visible radiation may be energised continuously or at predetermined times during reading of the card.

FIG.1.

FIG.3.

FIG.2

## CARD OR BADGE FOR CARRYING DATA AND READER THEREFOR

This invention relates to cards or badges for carrying data and to reading devices for reading the data from the card or badge. In particular the invention relates to such cards and badges in which the data is carried in a concealed manner and can be read from the card or badge by the reading device.

Cards or badges for carrying data in a concealed manner have many applications. One application is for use in relation to locations for which access is restricted to authorised persons only. Access to the location is controlled by an electronically operated lock which is responsive to data carried by a card. The card may carry merely sufficient data to operate the lock or may carry additional information for other purposes, for example, to maintain a record of those persons entering the location, the card may carry data to identify the card holder. Another application is for controlling access to a computer system such as through terminals of a banking or credit card computer system where only authorised users may gain access. In this specific application the data carried by the card identifies the holder of the card for accounting purposes. Cards may also be used in time recording systems for monitoring the times of arrival and departure of employees at a place of work, each employee having a personal card which identifies that employee.

In many applications, and particularly where the card is used as a security measure, it is essential to ensure that the data carried by the card cannot be changed easily otherwise the card could be used for unauthorised and/or fraudulent purposes. Additional security of the data carried by the card is usually provided by recording the data on the card in such a manner that it is not readily discernible by a user of the card or by any third party into whose hands the card may fall inadvertently or by theft.

A known card comprises a laminated card in which data is carried on an internal layer by means of areas of differing widths. The internal layer is bonded between outer layers which are opaque to visible light but are transparent to infra-red radiation. The binary digits of a string of data are recorded along a linear track on the card and are read serially by a reading device. Commonly, the card is fed manually through the reading device and in order to allow for varying and different speeds of manual movement of the card through the reading device, the data is recorded in a self clocking form such that each recorded binary digit can be identified by the reading device. The data is recorded in self clocking binary form by means of opaque bars, typically 0.5mm wide separated by wide transparent spaces 0.5mm wide in respect of binary digits of one value and narrow transparent spaces 0.2mm wide in respect of binary digits of the other value. The data is read from the card by means of a reading device which incorporates a source of infra-red radiation arranged to pass infra-red radiation through the thickness of the card, as the card is moved through the reading device, and a photocell sensitive to infra-red radiation receives the infra-red radiation which passes through the card. The infra-red radiation path between the source and the photocell is defined by a slit 0.4mm wide so that three different levels of radiation are detected in sensing the data track, i.e. no radiation corresponding to detection of an opaque bar, full level radiation corresponding to detection of a transparent area 0.5mm wide and half level radiation corresponding to detection of a 0.2mm wide transparent area. A scanning circuit connected to the output of the photocell senses whether, in the intervals between detection of adjacent opaque bars, the radiation received by the photocell is full level or half level and decodes these received radiation levels as binary bits of value '0' and '1'.

A convenient method of manufacturing cards for reading by infra-red radiation is to form the opaque bars by a printing process on a sheet which is of plastics material and then to bond the printed sheet between outer sheets. In order to ensure reliable reading of the data, the printing of the opaque bars must be of high definition. The printing definition which can be reliably achieved when printing in high volume on PVC sheet, which is to form the internal layer of the finished card, limits the maximum code density within the card.

In order to achieve the desired difference in transmissivity between the transparent areas and the opaque printed bars, it is necessary to use very dense ink which is substantially totally opaque to infra-red radiation. In addition very good printing definition is required to provide sharp clean edges to bars so as to achieve consistent levels of radiation passing through the spaces between the bars. This combination of requirements is difficult to meet when printing many thousands of uniquely coded cards.

Currently available dot matrix printers and laser printers have been tried but it was found that they do not provide sufficiently high print definition and the printed areas do not have the required opacity to infra-red radiation to permit reliable printing of code bars at the required density. With printers such as laser printers in which the printing is effected by depositing grains of toner powder in selected areas on the print receiving surface, voids occur between the grains in areas intended to be totally opaque and additionally stray grains often are deposited in areas intended to be totally clear. Consequently areas intended to be totally opaque may be partially transparent and areas intended to be totally transparent may be partially obscured. The result is inconsistent opacity of the opaque bars and inconsistent transparency of the transparent spaces between the bars, particularly the narrow bars. Also with printers such as laser printers, which print by deposition of grains of toner on the print receiving surface, the grains of toner must be fixed by applying heat to the grains. This heating melts or softens plastics such as PVC commonly used as the internal sheet in data carrying cards. Even if the heat is insufficient to melt the plastic of which the sheet is formed, the opaque code bars absorb the heat to a greater extent than the transparent areas and as a result the plastic in and around the areas of the opaque bars is subjected to distortion.

According to one aspect of the invention a card or badge is constructed of material substantially transparent to infra-red radiation and carrying binary data encoded in the form of a series of areas substantially opaque to infra-red radiation, said areas being separated by spaces transparent to infra-red radiation and being located internally of the card or badge along a track, one binary value being represented by an opaque area of first width, in a direction along the length of the track, and a second binary value being represented by an opaque area of second width, in said direction, less than said first width.

Preferably each area is rectangular.

Preferably the opaque areas are printed on a first sheet of material substantially transparent to infra-red radiation and said first sheet is interposed and bonded between second and third sheets of material substantially transparent to infra-red radiation and substantially opaque to radiation in a visible region of the spectrum.

The second and third sheets of material may have a predetermined transmissivity to radiation in a visible region of the spectrum.

The first sheet may have a predetermined transmissivity to radiation in a visible region of the spectrum.

According to a second aspect of the invention a reading device for a card or badge includes a first source of infra-red radiation; a second source of radiation in a band different from infra-red; sensing means responsive to radiation from said first and second sources; and means to guide the card or badge along a path intersecting radiation received by the sensing means from the first and second sources such that the areas opaque to infra-red radiation interrupt the radiation received from the infra-red source.

Preferably the second source of radiation is energised only at predetermined periods during reading data from the card or badge.

The reading device may include means operative in response during sensing of a transparent space between opaque areas to energise the second source of radiation. Energisation of the second source may be effected during sensing of said selected transparent spaces.

According to a further aspect of the invention a system comprises the combination of a card or badge as hereinbefore defined and a reading device as hereinbefore defined.

Embodiments of the invention will now be described by way of example with reference to the drawings in which:-

Figure 1 is an exploded view of a card carrying data in accordance with the invention

Figure 2 shows a cross section of a part of a reading device

Figure 3 illustrates the output of a photocell of the reading device of Figure 2 in relation to the data represented by code bars carried by the card and

Figure 4 is similar to Figure 3 and illustrates the output of a photocell of the reading device for a card transparent to visible light.

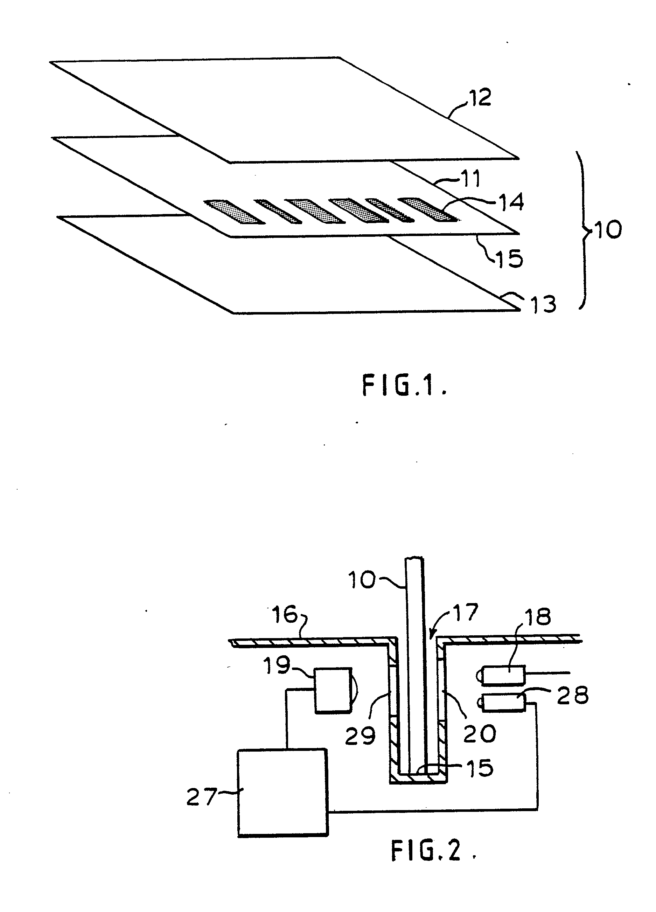

Referring first to Figure 1, a card or badge 10 comprises an inner layer 11 sandwiched between outer layers 12,13. The inner layer is formed of material which is transparent to infra-red radiation. A suitable material from which to form the inner layer 11 is PVC sheet. The inner layer 11 has printed thereon, in ink which is opaque to infra-red radiation, a plurality of code bars 14 representing a string of binary data bits. The form of the code bars 14 representing the data bits will be described in more detail hereinafter. After printing of the code bars 14 the inner layer 11 and outer layers 12, 13 are bonded together to form an integral card or badge with the printed code bars 14 lying internally of the card or badge 10. The outer layers 12, 13 are formed of a material which is transparent to infra-red radiation but which is substantially opaque to light in the visible region of the spectrum. Thus when the inner layer 11 has been bonded between the outer layers 12,13 the code bars 14 are hidden from visual inspection with visible light. The code bars 14 are arranged along a track extending parallel to a reference edge 15 of the card so that when the card 10 is guided through a reading device by engagement of the reference edge 15 of the card with a guide surface of the reading device, the code bars pass successively past a sensing position.

Figure 2 shows, in cross section, a part of a card reading device having an outer casing 16 and a slot 17 therein to receive the reference edge 15 of the card 10, the card being slidable along the slot in a direction perpendicular to the plane of the drawing with the reference edge 15 of the card engaging the bottom of the slot. An infra-red source 18, such as an LED, is positioned adjacent to one side of the slot 17 and a photocell 19 is positioned adjacent to the other side of the slot. The radiation from the source 18 passes through an aperture 20 and a slit 29 respectively in opposite side walls of the slot 17 and is received by the photocell 19. In its passage from the source to the photocell, the radiation passes through the card and is subjected to the transmissivity of that part of the card lying, at any instant, in a sensing position in the path of the radiation defined by the slit 29 in the wall of the slot. The slit 29 is disposed in relation to the bottom of the slot such that the track of code bars carried by the card passes through the sensing position as the card is moved manually along the length of the slot.

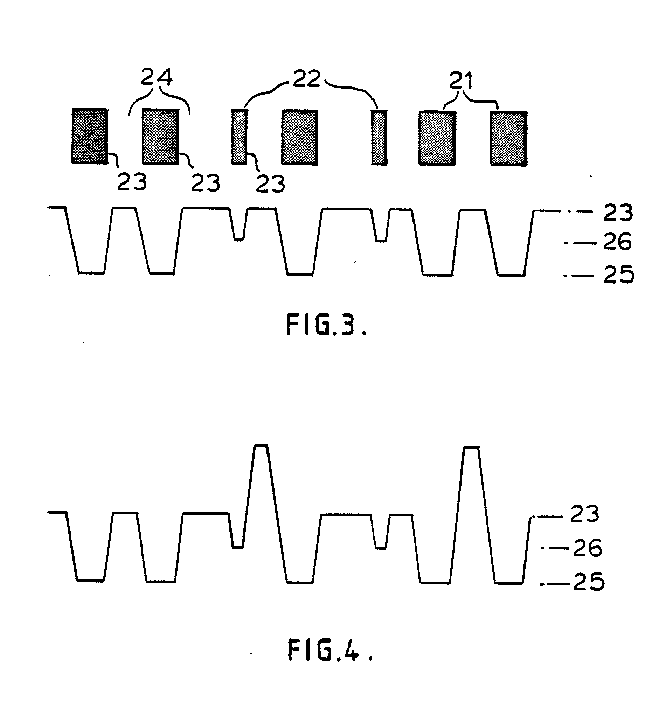

Referring now to Figure 3, a track of code bars 14 of a card is shown together with the output signal corresponding to the passage of the track through the sensing position defined by the slit 29. The code bars 14 consist of opaque wide bars 21 representing one binary value, for example binary '0', and opaque narrow bars 22 representing the other binary value, for example binary '1'. The inner layer on which the code bars are printed is of material transparent to infra-red radiation and hence the spaces between the code bars are transparent. The width of the slit 29, in the direction of movement of the card, is smaller than the width of the wide bars 21 and is larger than the width of the narrow bars 22. As is shown in Figure 3, the output of the photocell is at a maximum level 23 when a transparent space 24 between code bars lies in the sensing position defined by the slit 29. When a wide bar 21 lies in the sensing position and substantially inhibits radiation from the source reaching the photocell, the output of the photocell is reduced substantially to a zero level 25. However, when a narrow bar 22 passes through the sensing position, the radiation is only partially obscured from the photocell, because the narrow bar 22 is less wide than the slits 20, and the output of the photocell is reduced from the maximum level 23 to a level 26 intermediate the maximum level 23 and the zero level 25. Preferably the relationship of the width of the slits 20 and the width of the narrow bars 22 is chosen such that the intermediate level 26 is approximately half the maximum level 23.

By utilising opaque code bars 14 with transparent spaces therebetween, sensing of the spaces provides a substantially uniform consistent maximum level output 23 from the photocell to give a peak reference level between the code bars. Since this reference level is obtained from sensing of transparent spaces it is independent of any variations in ink opacity, ink thickness or voids in opaque areas which may occur in printing of the code bars. Any variation in opacity of the code bars results in a change of the absolute values of the levels 25 and 26 but this is relatively insignificant because the detection circuit 27 connected to the output of the photocell 19 is designed to respond to the ratio of the levels 25 and 26 and not to the absolute values of the levels.

The use of opaque code bars spaced by transparent spaces provides advantages in obtaining better definition during the printing of the bars than is obtained when using a code consisting of transparent or partially transparent windows in an opaque area. A smaller quantity of ink or toner is used and hence there is less ink to stray into areas intended to be transparent. Also the smaller overall area of the opaque code bars absorbs less heat during any heat fixing of toner particles and hence any distortion of the sheet of plastic material, on which printing is effected, is reduced. Higher definition is obtainable when printing fine, i.e. narrow, opaque areas on a transparent background than is possible when printing a relatively large opaque area containing fine clear areas. Accordingly improved consistency of high volume printing of tracks of code is obtained and as a result the code density on the card can be increased thereby permitting the encoding of longer streams of binary data on cards without increasing the dimensions of the card.

The construction of the card or badge is such that the encoded data is concealed from being read by the naked eye. However it is not possible to prevent all attempts at illicit reading of the code and thereby allowing duplication of the code onto another sheet of material for illicit purposes. Greater security may be provided by ensuring that only cards which have a predetermined transmissivity to light in the visible region of the spectrum but transparent, apart from the code bars, to radiation in the infra-red region give a valid reading by the reading device. The transmissivity of the card to visible light may be such that the card is opaque to all visible light or it may be selectively and partially transparent and be formed of material having visible light filtering properties1. The reading device is provided with an additional radiation source 28 arranged such that radiation from it passes through the aperture 20 and slit 29 and is received by the photocell 19. The source 28 produces radiation in the visible region of the spectrum. When a card 10 is moved along the slot 17, the photocell 19 receives radiation from the infra-red source 18 as described hereinbefore and, if the card is opaque to light from the source 28, the output of the photocell 19 will be as shown in Figure 3. However if the card is transparent or partially transparent to visible light from the source 28, the light from the source 28 will also be received by the photocell and as a result the output from the photocell will be at a level higher than the reference level 23. If desired both sources 18 and 28 may be continuously energised in which case the output of the photocell, in the absence of a card in the slot, would be at a higher level than the reference level 23 and would be reduced to the reference level 23 upon sensing of a space 24 transparent to infra-red but opaque to light from the source 28, of a card moved through the slot. If the card is partially transparent to light from the source 28, the output from the photocell would be reduced toward the reference level 23 by an amount determined by the transmissivity of the card to light from the source 28. It is preferred to continuously energise the infra-red source 18 and to switch the visible light source 28 on and off at predetermined times in the sequence of reading the encoded data from the card. For example, the light source 28 would be switched on for a predetermined period during sensing of some of the transparent spaces between code bars. The detection circuit 27 is provided with means operative, in response to sensing of a transparent area of the card, to energise the source 28 and then to detect an increase in the output of the photocell 19 when the source 28 is energised as compared with when the source 28 is not energised. Conveniently, the source 28 may be energised during the sensing of each third transparent area along a code track of the card. If the card has a predetermined transmissivity to visible light from the source 28 the output of the photocell is measured to check that the card being read has the required transmissivity to light from the source 28 thereby providing confirmation or otherwise that the card is manufactured of material to a defined standard. The visible light source 28 may produce radiation in a narrow band of visible light, i.e. visible light of one colour such as red, yellow or green, and like the infra-red source may be an LED. Thus the card may be manufactured of materials having not only a predetermined transmissivity to visible light but also having a predetermined transmissivity only to the colour band of light radiated by the source 28. Thus it will be appreciated that the data encoded in the card is read by transmission of radiation in one band, i.e. infra-red, through the card, validity of the card is verified by checking the transmissivity of the card to radiation in another band of the spectrum, for example a visible colour band. The transmissivity to radiation in the other band of the spectrum may be substantially zero or may have a defined filtering characteristic to transmit a predetermined percentage of radiation within a predetermined band of radiation.

## Claims

1. A card or badge constructed of material substantially transparent to infra-red radiation characterised in that binary data carried thereby is encoded in the form of a series of areas (14) substantially opaque to infra-red radiation, said areas being separated by spaces (24) transparent to infra-red radiation and being located internally of the card or badge along a track, one binary value being represented by an opaque area (21) of first width, in a direction along the length of the track, and a second binary value being represented by an opaque area (22) of second width, in said direction, less than said first width.

2. A card or badge as claimed in claim 1 further characterised in that each area (21, 22) is rectangular.

3. A card or badge as claimed in claim 1 or 2 further characterised in that the opaque areas (14) are printed on a first sheet (11) of material substantially transparent to infra-red radiation and said first sheet (11) is interposed and bonded between second and third sheets (12, 13) of material substantially transparent to infra-red radiation and substantially opaque to radiation in a visible region of the spectrum.

4. A card or badge as claimed in claim 1 or 2 further characterised in that the opaque areas (14) are printed on a first sheet (11) of material substantially transparent to infra-red radiation and said first sheet (11) is interposed and bonded between second and third sheets (12, 13) of material substantially transparent to infra-red radiation and having a predetermined transmissivity to radiation in a visible region of the spectrum.

5. A card or badge as claimed in claims 2, 3 or 4 further characterised in that said first sheet (11) of material is opaque or has a predetermined transmissivity to radiation in a visible region of the spectrum.

6. A reading device for a card or badge as claimed in any preceding claim characterised by a first source of infra-red radiation (18); a second source (28) of radiation in a band different from infra-red; sensing means (19) responsive to radiation from said first and second sources (18, 28); and a guide (15) to guide the card or badge (10) along a path intersecting radiation received by the sensing means (19) from the first and second sources (18, 28) such that the areas (14) opaque to infra-red radiation interrupt the radiation received from the infra-red source (18).

7. A reading device as claimed in claim 6 further characterised in that the second source (28) of radiation is energised only at predetermined periods during reading data from the card or badge (10).

8. A reading device as claimed in claim 7 further characterised by means (27) operative in response to sensing of a transparent space (24) between opaque areas to energise the second source of radiation (28).

9. A reading device as claimed in claim 8 further characterised by means (27) operative in response to sensing of selected transparent spaces (24) to energise the second source (28) during sensing of said selected transparent spaces (24).

10. A system comprising the combination of a card or badge as claimed in any one of claims 1 to 5 and a reading device as claimed in any one of claims 6 to 9.

FIG.1.

FIG.2.

FIG.3.

FIG.4.